(19) Europäisches Patentamt
European Patent Office
Office européen des brevets

(11) **EP 4 657 908 A1**

(12) **EUROPEAN PATENT APPLICATION**
published in accordance with Art. 153(4) EPC

(43) Date of publication:
**03.12.2025 Bulletin 2025/49**

(21) Application number: **24841966.5**

(22) Date of filing: **27.03.2024**

(51) International Patent Classification (IPC):
**H04W 12/069** (2021.01)    **G01S 5/02** (2010.01)
**H04W 12/0471** (2021.01)

(52) Cooperative Patent Classification (CPC):
**H04W 4/02; H04W 12/069; H04W 76/15;**
G01S 5/02; H04W 12/0471

(86) International application number:
**PCT/CN2024/084061**

(87) International publication number:
**WO 2025/015965 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.07.2023  CN 202310865909**

(71) Applicant: **ZTE Corporation**
**Shenzhen, Guangdong  518057 (CN)**

(72) Inventor: **YUAN, Liquan**
**Shenzhen, Guangdong 518057 (CN)**

(74) Representative: **Vossius & Partner**
**Patentanwälte Rechtsanwälte mbB**
**Siebertstraße 3**
**81675 München (DE)**

(54) **MULTI-LINK COMMUNICATION METHOD, COMMUNICATION NODE, AND STORAGE MEDIUM**

(57)    Provided are a multi-link communication method, a communication node, and a storage medium. The method includes the following: A transmission key is generated by interaction with a second communication node through a first link, where at least two links are included between the first communication node and the second communication node. Through a second link, ranging-related information transmitted between the first communication node and the second communication node is processed based on the transmission key, where the second link is any one of the at least two links.

Step 201

Generate a transmission key by interaction with a second communication node through a first link

Step 202

Process, through a second link, ranging-related information transmitted between the first communication node and the second communication node based on the transmission key

**FIG. 2**

**Description**

TECHNICAL FIELD

This application relates to the field of communication technology, for example, to a multi-link communication method, a communication node, and a storage medium.

BACKGROUND

In 2022, the Institute of Electrical and Electronics Engineers (IEEE) 802.11az working group completed the definition of the final version. As a next-generation positioning technology, 802.11az is characterized by improvements to the physical layer based on the High Efficiency (HE) Physical Layer (PHY) defined by the Wireless Fidelity (Wi-Fi) 6 protocol. For example, the HE ranging Presentation Protocol Data Unit (PPDU) defined by the 802.11az ranging technology includes an HE ranging Null Data Packet (NDP) and an HE Trigger-Based (TB) ranging NDP and allows a station (STA) to perform ranging with multiple Access Points (APs), ultimately achieving multi-point positioning.

However, there is currently no relevant solution regarding how to achieve secure and flexible multi-link communication between an STA and an AP.

SUMMARY

Embodiments of this application provide a multi-link communication method. The method is applied to a first communication node and includes the following:

A transmission key is generated by interaction with a second communication node through a first link, where at least two links are included between the first communication node and the second communication node.

Through a second link, ranging-related information transmitted between the first communication node and the second communication node is processed based on the transmission key, where the second link is any one of the at least two links.

Embodiments of this application provide a multi-link communication method. The method is applied to a second communication node and includes the following:

A transmission key is generated by interaction with a first communication node through a first link, where at least two links are included between the first communication node and the second communication node.

Through a second link, ranging-related information transmitted between the first communication node and the second communication node is processed based on the transmission key, where the second link is any one of the at least two links.

Embodiments of this application provide a first communication node. The first communication node includes a processor that, when executing a computer program, implements the multi-link communication method of any of the preceding embodiments.

Embodiments of this application provide a second communication node. The second communication node includes a processor that, when executing a computer program, implements the multi-link communication method of any of the preceding embodiments.

Embodiments of this application also provide a computer-readable storage medium storing a computer program, and when the computer program is executed by a processor, the method of any of the preceding embodiments is implemented.

The preceding embodiments and other aspects of this application and implementations thereof are described in more detail in the description of drawings, detailed description, and claims.

BRIEF DESCRIPTION OF DRAWINGS

FIG. 1A is a diagram illustrating the networking of a wireless communication system according to an embodiment.

FIG. 1B is a diagram illustrating the networking of another wireless communication system according to an embodiment.

FIG. 2 is a flowchart of a multi-link communication method according to an embodiment.

FIG. 3 is a diagram illustrating the interaction of a multi-link communication method according to an embodiment.

FIG. 4 is a diagram illustrating a multi-link connection establishment process according to an embodiment.

FIG. 5 is a flowchart of another multi-link communication method according to an embodiment.

FIG. 6 is a diagram illustrating the interaction of a multi-link communication method according to an embodiment.

FIG. 7A is a diagram of a first preassociation security negotiation (PASN) authentication frame in the related art.

FIG. 7B is a diagram of a second PASN authentication frame in the related art.

FIG. 7C is a diagram of a third PASN authentication frame in the related art.

FIG. 8 is a diagram of a multi-link element according to an embodiment.

FIG. 9A is a diagram of a first authentication frame according to an embodiment.

FIG. 9B is a diagram of a second authentication frame according to an embodiment.

FIG. 9C is a diagram of a third authentication frame according to an embodiment.

FIG. 10 is a flowchart of a multi-link communication method according to an embodiment.

FIG. 11 is a flowchart of another multi-link communication method according to an embodiment.

FIG. 12 is a diagram of an application of a multi-link communication method according to an embodiment.

FIG. 13 is a diagram illustrating the structure of a multi-link communication apparatus according to an embodiment.

FIG. 14 is a diagram illustrating the structure of another multi-link communication apparatus according to an embodiment.

FIG. 15 is a diagram illustrating the structure of a multi-link terminal device according to an embodiment.

FIG. 16 is a diagram illustrating the structure of a multi-link network device according to an embodiment.

DETAILED DESCRIPTION

It is to be understood that the specific embodiments described herein are intended to explain this application and not to limit this application. Embodiments of this application are described hereinafter in detail in conjunction with drawings.
The multi-link communication method provided by this application may be applied to various types of wireless communication systems, such as a Long-Term Evolution (LTE) system, a 4th-generation mobile communication technology (4G) system, a 5th-generation mobile communication technology (5G) system, an LTE and 5G hybrid architecture system, a 5G New Radio (NR) system, 802.11az, Wi-Fi 8, and a new communication system emerging in future communication development, for example, a 6th-generation mobile communication technology (6G) system.

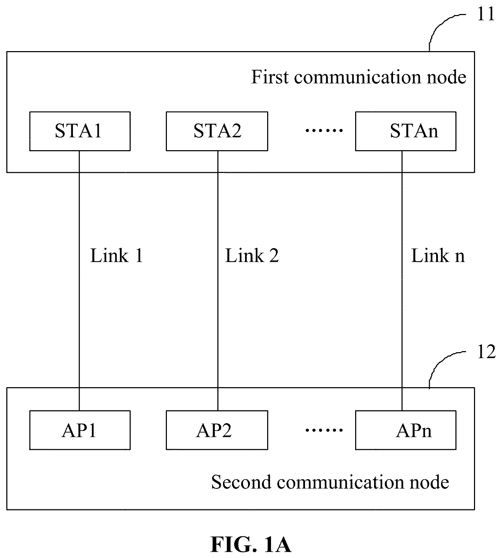

FIG. 1A is a diagram illustrating the networking of a wireless communication system according to an embodiment. As shown in FIG. 1A, the wireless communication system provided by this embodiment includes a first communication node 11 and a second communication node 12. The first communication node 11 may include multiple STAs, such as STA1, STA2, ..., and STAn. The second communication node 12 may include multiple APs, such as AP1, AP2, ..., and APn. Multiple links may be established between the first communication node 11 and the second communication node 12, such as link 1 between STA1 and AP1, link 2 between STA2 and AP2, ..., and link n between STAn and APn, where n is an integer greater than 0.

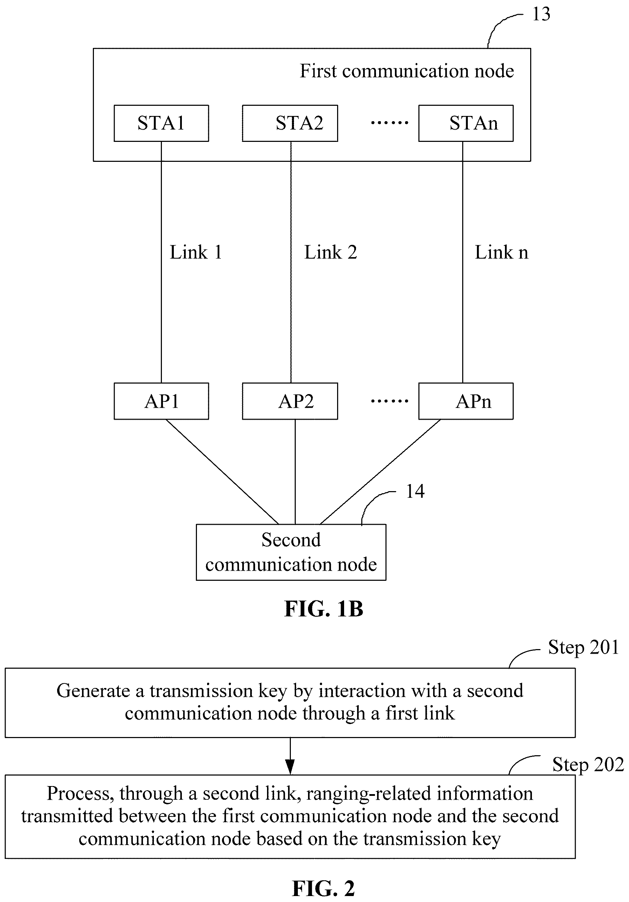

FIG. 1B is a diagram illustrating the networking of another wireless communication system according to an embodiment. As shown in FIG. 1B, the wireless communication system provided by this embodiment includes a first communication node 13 and a second communication node 14. The first communication node 13 may include multiple STAs, such as STA1, STA2, ..., and STAn. The second communication node 14 includes multiple APs deployed at different locations, such as AP1, AP2, ..., and APn. Similar to FIG. 1A, multiple links may be established between the first communication node 13 and the second communication node 14, such as link 1 between STA1 and AP1, link 2 between STA2 and AP2, ..., and link n between STAn and APn.

Currently, no relevant solution is present for achieving secure and flexible multi-link communication in the systems shown in FIG. 1A and FIG. 1B.

This embodiment provides a multi-link communication method, including the following: A first communication node interacts with a second communication node through a first link to generate a transmission key, where at least two links are included between the first communication node and the second communication node. Through a second link, ranging-related information transmitted between the first communication node and the second communication node is processed based on the transmission key, where the second link is any one of the at least two links. The method achieves the following technical effects: On the one hand, the transmission key generated through the interaction between the first communication node and the second communication node via the first link can be used to transmit the ranging-related information between the first communication node and the second communication node, enhancing the security of multi-link communication and thereby improving the security of ranging and positioning. On the other hand, the transmission key is generated through the first link, and the ranging-related information is transmitted through the second link, where the first link and the second link may be the same or different, thus improving the flexibility of multi-link communication and enhancing the flexibility of ranging and positioning. Moreover, after the transmission key is generated through the first link, it is not required to generate a key again when ranging-related information is transmitted; instead, the transmission key generated through the first link is directly used, improving the communication efficiency of multi-link communication and thus enhancing the efficiency of ranging and positioning.

The multi-link communication method, communication node, and their technical effects are described below.

FIG. 2 is a flowchart of a multi-link communication method according to an embodiment. The method provided by this embodiment is applicable to a first communication node. In this example, the first communication node (also referred to as the first communication node device) may be a terminal device. The terminal device in this embodiment may be a non-AP Multi-Link Device (non-AP MLD) supporting the 802.11az protocol or a multi-link terminal device connected to a non-collocated AP MLD in the Wi-Fi 8 protocol. The method includes the following.

In 201, a transmission key is generated by interaction with a second communication node through a first link.

At least two links are included between the first communication node and the second communication node.

The second communication node in this embodiment may be a network device. For example, the second communication node may be a multi-link network device (AP MLD) supporting the 802.11az protocol or a non-collocated AP MLD in the Wi-Fi 8 (802.11bn) protocol.

The first communication node in this embodiment may include multiple affiliated sub-nodes, referred to as STAs in this embodiment. The second communication node also includes multiple affiliated sub-nodes, referred to as APs in this embodiment. STAs and APs are in a one-to-one correspondence, and links are established between STAs and APs.

The difference between an AP MLD and a non-collocated AP MLD is that at least two APs included in an AP MLD are located on the same physical machine, while at least two APs included in a non-collocated AP MLD are deployed on different physical machines at different locations.

At least two links are included between the first communication node and the second communication node in this embodiment. The first link in this embodiment is any one of the at least two links.

The first communication node and the second communication node may generate a transmission key through an interaction process. The transmission key in this embodiment may be a Pairwise Transient Key (PTK) or a Pairwise Master Key (PMK).

The process of generating the transmission key may involve mutual transmission of device addresses between the first communication node and the second communication node. The first communication node generates the transmission key based on the device address of the first communication node and the device address of the second communication node. The second communication node generates the transmission key based on the device address of the first communication node and the device address of the second communication node. The specific interaction process is described in detail in subsequent embodiments.

In 202, through a second link, ranging-related information transmitted between the first communication node and the second communication node is processed based on the transmission key.

The second link is any one of the at least two links.

In this embodiment, the second link is any one of the at least two links, that is, the second link may be the same as or different from the first link. This embodiment does not impose limitations on this.

The first communication node in this embodiment may send the ranging-related information to the second communication node through the second link based on the transmission key or receive the ranging-related information from the second communication node through the second link based on the transmission key.

Optionally, the first communication node sending the ranging-related information to the second communication node through the second link based on the transmission key refers to the first communication node encrypting the ranging-related information based on the transmission key and sending the encrypted ranging-related information to the second communication node through the second link. The encrypted ranging-related information in this embodiment may be included in a Fine Timing Measurement (FTM) frame.

Optionally, the first communication node receiving the ranging-related information from the second communication node through the second link based on the transmission key refers to the first communication node receiving the ranging-related information from the second communication node through the second link and decrypting the received ranging-related information using the transmission key. The ranging-related information sent by the second communication node in this embodiment may be included in an FTM frame.

Optionally, the ranging-related information in this embodiment includes time information and other related information. The ranging-related information in this embodiment is used to determine the position of the first communication node relative to the second communication node, thereby achieving positioning of the first communication node.

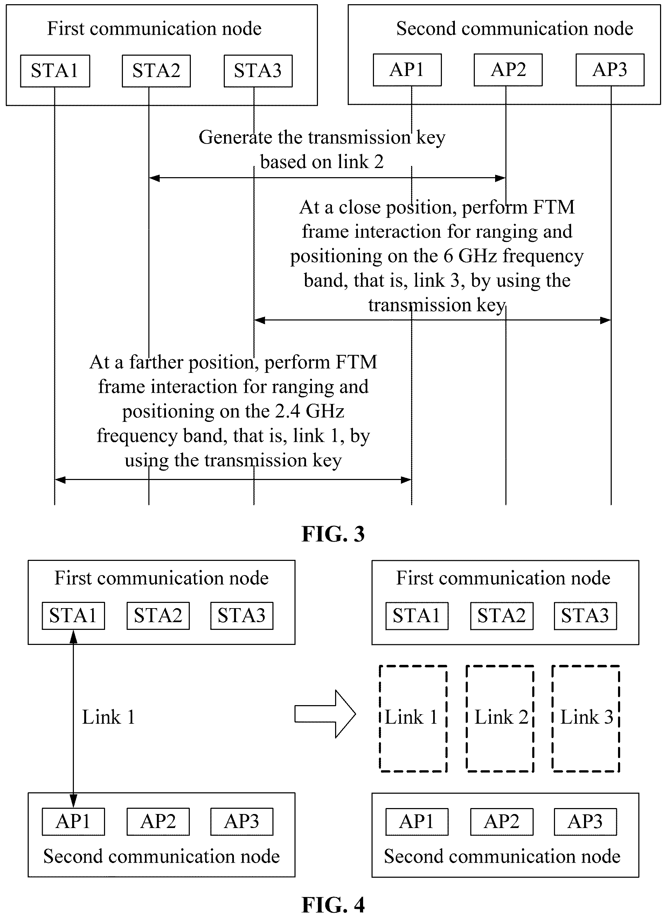

FIG. 3 is a diagram illustrating the interaction of a multi-link communication method according to an embodiment. As shown in FIG. 3, the first communication node includes STA1, STA2, and STA3, and the second communication node includes AP1, AP2, and AP3. Link 1 is established between STA1 and AP1 and operates in a first frequency band, for example, 2.4 GHz. Link 2 is established between STA2 and AP2 and operates in a second frequency band, for example, 5 GHz. Link 3 is established between STA3 and AP3 and operates in a third frequency band, for example, 6 GHz. Based on the multi-link communication method provided by this embodiment, the first communication node and the second communication node may interact through any one of link 1, link 2, or link 3 to generate a transmission key. It is assumed that the transmission key is generated based on link 2. Subsequently, based on the coverage range and signal attenuation differences of Wi-Fi signals in different frequency bands, when the first communication node is at a position close to the second communication node, the first communication node performs FTM frame interaction for ranging and positioning on a 6 GHz frequency band, that is, link 3, by using the transmission key; and when the first communication node is at a position farther from the second communication node, the first communication node performs FTM frame interaction for ranging and positioning on a 2.4 GHz frequency band, that is, link 1, by using the transmission key. In this manner, flexible, secure, and efficient multi-link communication between the first communication node and the second communication node can be achieved, and thus flexible, secure, and efficient ranging and positioning between the first communication node and the second communication node can be achieved.

FIG. 4 is a diagram illustrating a multi-link connection establishment process according to an embodiment. The STAs included in the first communication node in FIG. 4 are similar to those included in the first communication node in FIG. 3. The APs included in the second communication node in FIG. 4 are similar to those included in the second communication node in FIG. 3. After the first communication node and the second communication node generate a transmission key through link 1, they can use the transmission key to transmit data on link 1, link 2, and link 3.

This embodiment provides a multi-link communication method, including the following: A first communication node interacts with a second communication node through a first link to generate a transmission key, where at least two links are included between the first communication node and the second communication node. Through a second link, ranging-related information transmitted between the first communication node and the second communication node is processed based on the transmission key, where the second link is any one of the at least two links. The method achieves the following technical effects: On the one hand, the transmission key generated through the interaction between the first communication node and the second communication node via the first link can be used to transmit the ranging-related information between the first communication node and the second communication node, enhancing the security of multi-link communication and thereby improving the security of ranging and positioning. On the other hand, the transmission key is generated through the first link, and the ranging-related information is transmitted through the second link, where the first link and the second link may be the same or different, thus improving the flexibility of multi-link communication and enhancing the flexibility of ranging and positioning. Moreover, after the transmission key is generated through the first link, it is not required to generate a key again when ranging-related information is transmitted; instead, the transmission key generated through the first link is directly used, improving the communication efficiency of multi-link communication and thus enhancing the efficiency of ranging and positioning.

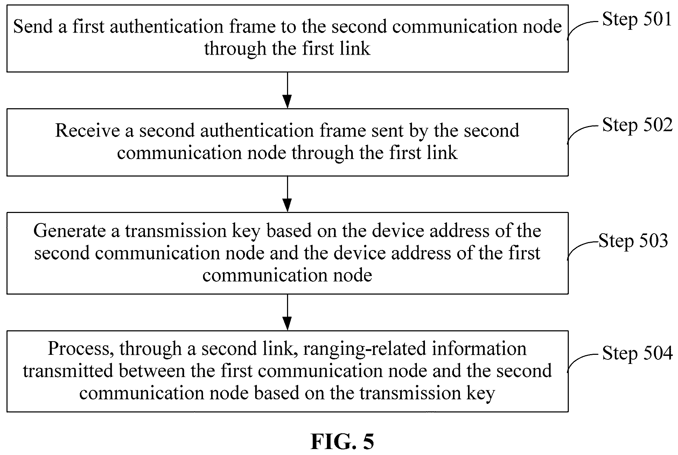

FIG. 5 is a flowchart of another multi-link communication method according to an embodiment. Based on the embodiment shown in FIG. 2 and various optional implementations, this embodiment elaborates on the process of generating a transmission key. As shown in FIG. 5, the multi-link communication method provided by this embodiment includes the following.

In 501, a first authentication frame is sent to the second communication node through the first link.

The first authentication frame includes a device address of the first communication node.

Optionally, the device address of the first communication node in this embodiment is a Media Access Control (MAC) address of the first communication node. The device address of the first communication node may also be another address that uniquely identifies the first communication node.

In 502, a second authentication frame sent by the second communication node is received through the first link.

The second authentication frame includes a device address of the second communication node.

Optionally, the device address of the second communication node in this embodiment is a MAC address of the second communication node. The device address of the second communication node may also be another address that uniquely identifies the second communication node.

In 503, a transmission key is generated based on the device address of the second communication node and the device address of the first communication node.

Optionally, generating the transmission key in this embodiment requires at least the device address of the second communication node, the device address of the first communication node, and a Pseudo-Random Function (PRF).

Optionally, the transmission key may be generated based on the PTK generation formula defined in 802.11az. The MAC address of the second communication node is used as the authentication MAC address, and the MAC address of the first communication node is used as the supplicant MAC address. The generation formula is as follows:

$$PTK = PRF - Length(PMK, \text{"Pairwise key expansion"}, Min(AA, SPA) \| Max(AA, SPA) \| Min(ANonce, SNonce) \| Max(ANonce, SNonce)).$$

In the formula, PRF refers to a pseudo-random function. AA is the MAC address of the second communication node. SPA is the MAC address of the first communication node. ANonce refers to a random number related to the second communication node. SNonce refers to a random number related to the first communication node. Min refers to taking the minimum value. Max refers to taking the maximum value. || represents a concatenation operator, where A||B means A and B are concatenated.

In an embodiment, after 502, the method may also include sending a third authentication frame to the second communication node through the first link. The third authentication frame includes the device address of the first communication node.

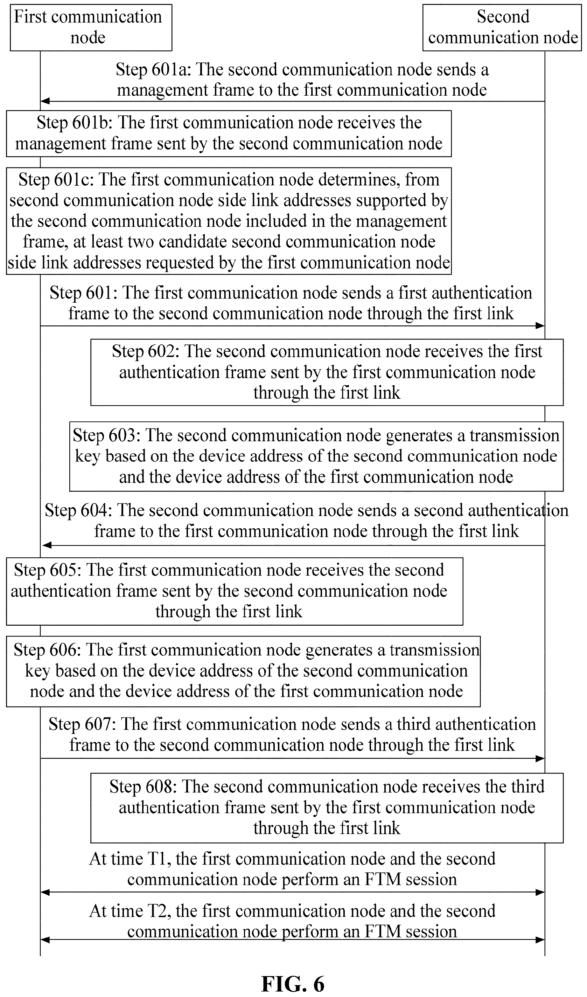

FIG. 6 is a diagram illustrating the interaction of a multi-link communication method according to an embodiment. As shown in FIG. 6, the multi-link communication method includes the following.

In 601, the first communication node sends a first authentication frame to the second communication node through the first link.

In 602, the second communication node receives, through the first link, the first authentication frame sent by the first communication node.

In 603, the second communication node generates a transmission key based on the device address of the second communication node and the device address of the first communication node.

In 604, the second communication node sends a second authentication frame to the first communication node through the first link.

In 605, the first communication node receives, through the first link, the second authentication frame sent by the second communication node.

In 606, the first communication node generates a transmission key based on the device address of the second communication node and the device address of the first communication node.

In 607, the first communication node sends a third authentication frame to the second communication node through the first link.

In 608, the second communication node receives, through the first link, the third authentication frame sent by the first communication node.

No temporal dependency exists between 603 and 604.

In a multi-link communication scenario, each link has two addresses, that is, a first communication node side link address and a second communication node side link address. The first communication node side link address refers to the link address of each affiliated sub-node of the first communication node, that is, STA1 link address, STA2 link address, ..., and STAn link address. The second communication node side link address refers to the link address of each affiliated sub-node of the second communication node, that is, AP1 link address, AP2 link address, ..., and APn link address.

The first communication node and the second communication node may also exchange their respective link addresses.

Optionally, in this embodiment, the first authentication frame also includes at least two candidate second communication node side link addresses requested by the first communication node.

Optionally, in this embodiment, the second authentication frame also includes at least two target second communication node side link addresses of the second communication node.

Optionally, in this embodiment, the target second communication node side link address of the second communication node included in the second authentication frame may be a single address.

In this embodiment, the second communication node side link addresses requested by the first communication node are referred to as candidate second communication node side link addresses. The second communication node side link addresses fed back by the second communication node to the first communication node are referred to as the target second communication node side link addresses.

The at least two target second communication node side link addresses included in the second authentication frame may be implemented in the following manners:

In a first implementation, the second authentication frame also includes a status code for each link. That is, the second authentication frame includes the second communication node side link addresses and the status code for each link. The status code may indicate whether a connection is allowed to be established on this link. In this embodiment, a second communication node side link address with a status code indicating that a connection is allowed to be established on the link is referred to as a target second communication node side link address.

In a second implementation, the second communication node side link addresses fed back by the second communication node in the second authentication frame are all second communication node side link addresses corresponding to links on which the connection is allowed to establish. Thus, in this implementation, the second communication node side link addresses included in the second authentication frame are all target second communication node side link addresses.

Optionally, the target second communication node side link address includes at least one of an index of a target second communication node side link or a MAC address of the target second communication node side link. It can be understood that the candidate second communication node side link address includes at least one of an index of a candidate second communication node side link or a MAC address of the candidate second communication node side link.

In this embodiment, the index of a link may also be referred to as a link ID. The MAC address of a link may also be referred to as a link identifier. The second communication node side link address may include any one of the second communication node side link ID and the second communication node side link identifier, or both the second communication node side link ID and the second communication node side link identifier. In this embodiment, both the link ID and the link identifier can uniquely identify a link, and the difference is that the link ID has fewer bits than the link identifier, thus saving transmission resources.

In an implementation, the at least two target second communication node side link addresses are the same as the at least two candidate second communication node side link addresses.

In another implementation, the at least two target second communication node side link addresses are a subset of the at least two candidate second communication node side link addresses. In this implementation, after receiving the first authentication frame, the second communication node may select, based on factors such as its network status, scheduling strategy, and access control, from the at least two candidate second communication node side link addresses included in the first authentication frame at least two target second communication node side link addresses allowed to establish a session. For example, the first communication node supports three links at 2.4 GHz, 5 GHz, and 6 GHz and intends to establish an FTM session on all three links, while the second communication node may only be allowed to establish sessions on 2.4 GHz and 5 GHz. In this example, the first authentication frame sent by the first communication node to the second communication node includes the second communication node side link addresses corresponding to the links at 2.4 GHz, 5 GHz, and 6 GHz. The second authentication frame returned by the second communication node to the first communication node includes the second communication node side link addresses corresponding to the links at 2.4 GHz and 5 GHz.

In this embodiment, the first communication node may also perform the following operation: determining, based on the second authentication frame, a first communication node side link address corresponding to the at least two target second communication node side link addresses.

Optionally, the first authentication frame or the third authentication frame in this embodiment also includes a first communication node side link address.

Optionally, both the first authentication frame and the third authentication frame also include a first communication node side link address.

Optionally, the first communication node side link address includes a MAC address of the first communication node side link (STA link MAC address). In other words, the first communication node side link address includes a first communication node side link identifier (STA link identifier).

Optionally, the third authentication frame in this embodiment may also include at least one target second communication node side link address.

It should be noted that in scenarios where only the third authentication frame includes the first communication node side link address, the first communication node side link address here may correspond to the at least two target second communication node side link addresses.

When the first communication node side link address is sent through the third authentication frame, the first communication node side link address may be encrypted using the generated transmission key, thereby further enhancing the security of multi-link communication.

Optionally, with continued reference to FIG. 6, before 601, the method may also include 601a to 601c.

In 601a, the second communication node sends a management frame to the first communication node.

The management frame includes second communication node side link addresses supported by the second communication node.

In 601b, the first communication node receives the management frame sent by the second communication node.

Optionally, before 601a, the first communication node may use the multi-link discovery process defined by the 802.11be or 802.11bn protocol to discover a second communication node supporting the 802.11az protocol. Subsequently, the second communication node may send the management frame to the first communication node. The management frame in this embodiment may be a beacon frame or a probe response frame.

Optionally, after the first communication node receives the management frame, 601c may be performed.

In 601c, the first communication node determines, from the second communication node side link addresses supported by the second communication node and included in the management frame, at least two candidate second communication node side link addresses requested by the first communication node.

Optionally, the management frame includes a first management frame and/or a second management frame. The first management frame includes one second communication node side link address. The second management frame includes at least two second communication node side link addresses.

Optionally, at least two first management frames located on different links are provided. In other words, the first communication node receives at least two management frames on at least two links, respectively, and acquires the second communication node side link addresses of the two links respectively through the MAC headers of the at least two management frames.

The transmission link of the management frame in 601a and 601b (including the second communication node sending the management frame and the first communication node receiving the management frame) may be the same as or different from the first link in 601. This embodiment does not impose limitations on this.

Optionally, the management frame in this embodiment also includes a source Robust Security Network Element (RSNE) and a source Robust Security Network Extension Element (RSNXE).

Optionally, the first authentication frame in this embodiment also includes at least one of a first RSNE or a first RSNXE. Further, request link information in the first authentication frame also includes at least one of a first RSNE or a first RSNXE. The request link information in the first authentication frame is introduced later.

Optionally, the first RSNE and the first RSNXE are a subset of the source RSNE and the source RSNXE included in the management frame. This implementation can improve the success rate of establishing multi-link communication between the first communication node and the second communication node.

Optionally, the second authentication frame also includes at least one of an indication of whether a link connection is allowed, a second RSNE, or a second RSNXE. Further, request link information in the second authentication frame also includes at least one of an indication of whether a link connection is allowed, a second RSNE, or a second RSNXE.

The possible implementations of the first authentication frame, the second authentication frame, and the third authentication frame are described in detail below.

The first authentication frame, the second authentication frame, and the third authentication frame in this embodiment may be frames improved based on the preassociation security negotiation (PASN) authentication frames defined in 802.11az.

In the related art, the first communication node and the second communication node interact through three PASN authentication frames, where the first PASN authentication frame is sent from the first communication node to the second communication node; the second PASN authentication frame is sent from the second communication node to the first communication node; and the third authentication frame is sent from the first communication node to the second communication node.

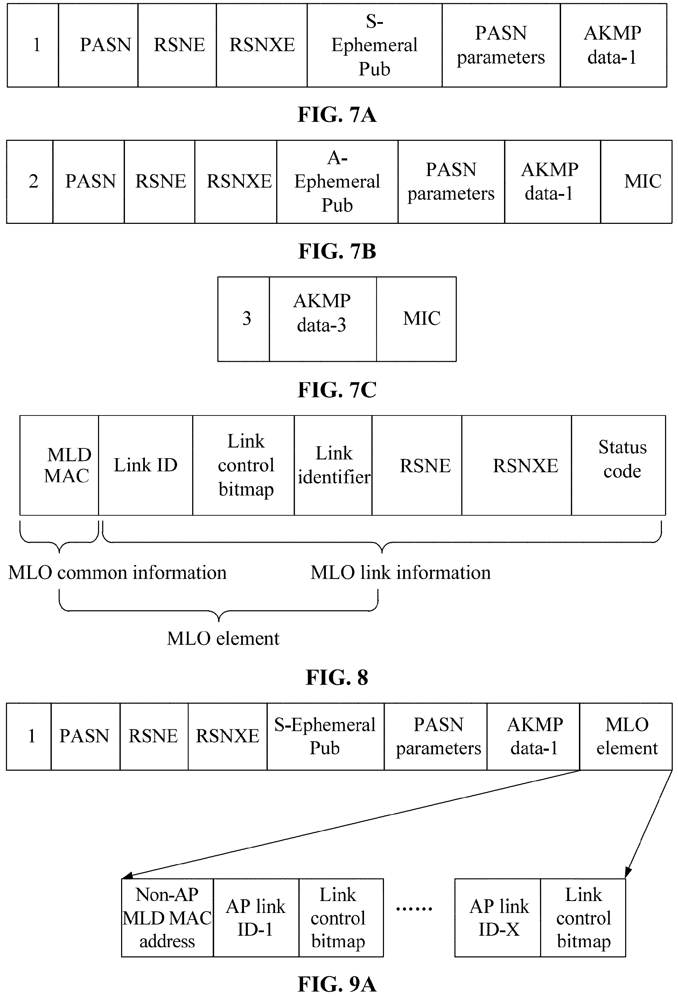

FIG. 7A is a diagram of a first PASN authentication frame in the related art. As shown in FIG. 7A, 1 indicates that the sequence number of the authentication frame is 1, and PASN indicates that the subtype of the authentication frame is PASN. The RSNE includes authentication key suite information, master key algorithm information, and Pairwise Master Key Identifier (PMKID) information. The RSNXE includes information such as a Simultaneous Authentication of Equals (SAE) hash-to-element, an HE-Long-Train Field (LTF) protection capability set, and a Round-Trip Time (RTT) protection capability set. S-Ephemeral Pub indicates a temporary public key generated by the first communication node side. PASN parameters include a field length, a field ID, a finite cyclic selection algorithm, a temporary public key length, and temporary public key information. AKMP data-1 includes data information used for 802.1X authentication in the first PASN authentication frame.

FIG. 7B is a diagram of a second PASN authentication frame in the related art. As shown in FIG. 7B, 2 indicates that the sequence number of the authentication frame is 2. The meanings and contents of the PASN, RSNE, RSNXE, and PASN parameters are similar to those in FIG. 7A and are not repeated here. A-Ephemeral Pub indicates a temporary public key generated by the second communication node side. AKMP data-2 includes data information used for 802.1X authentication in the second PASN authentication frame. MIC indicates Message Integrity Check (MIC).

FIG. 7C is a diagram of a third PASN authentication frame in the related art. As shown in FIG. 7C, 3 indicates that the sequence number of the authentication frame is 3. AKMP data-3 includes data information used for 802.1X authentication in the third PASN authentication frame.

In this embodiment, a Multi-link Operation (MLO) element may be defined. FIG. 8 is a diagram of a multi-link element according to an embodiment. As shown in FIG. 8, the MLO element includes two parts, that is, MLO common information (common info) and MLO link information (link info). The MLO common info includes a device address of a communication node. The device address of the communication node includes the device address of the second communication node (such as the AP MLD MAC address) or the device address of the first communication node (such as the non-AP MLD MAC address information). The MLO link info includes at least one of a link address field or a link-related information field. The link address field may include a link ID field and a link identifier field. The link-related information field may include at least one of a link control bitmap field, a status code field, an RSNE, or an RSNXE. The explanation of each field is described in Table 1.

Table 1 Explanation of MLO Element Fields

| Field Name | Field Explanation |
|---|---|
| MLD MAC | AP MLD MAC address information or non-AP MLD MAC address information |
| Link ID | Link number (index) of AP MLD or link number of non-AP MLD |
| Link Control Bitmap | Each bit indicates the presence of subsequent fields; for example, 00 indicates no subsequent fields, and 01 indicates that only the status code field is included. |
| Link Identifier | 6-bit MAC address information or other information |
| Status Code | Indication of whether a connection is allowed on the link; for example, 0 indicates rejection, and 1 indicates allowance. |

The following describes the implementation of the first authentication frame, the second authentication frame, and the third authentication frame, with an example where the first communication node is a non-AP MLD and the second communication node is an AP MLD (including a non-collocated AP MLD): The first communication node side link address may include an STA link identifier (STA link MAC address). The second communication node side link address may include an AP link ID and/or an AP link identifier (AP link MAC address).

FIG. 9A is a diagram of a first authentication frame according to an embodiment. As shown in FIG. 9A, the first authentication frame in this embodiment may be implemented by adding an MLO element to the first PASN authentication frame. The MLO element in the first authentication frame includes a non-AP MLD MAC address and MLO link information (that is, the request link information of the first authentication frame). The MLO link information in the first authentication frame includes the AP link ID, a link control bitmap, a first RSNE (not shown in the figure), and a first RSNXE (not shown in the figure). The AP link ID may include multiple IDs, represented as AP link ID-1, ..., and AP link ID-x in FIG. 9A. The link control bitmap, the first RSNE, and the first RSNXE are optional contents in the first authentication frame. As mentioned earlier, the AP link ID in the first authentication frame is the at least two candidate second communication node side link addresses determined by the non-AP MLD from the management frame sent by the AP MLD. The link control bitmap may correspond to the AP link ID. x is an integer greater than 0.

It can be understood that the MLO link information in the MLO element of the first authentication frame may also include an AP link MAC address (that is, an AP link identifier) or replace the AP link ID with an AP link MAC address.

Optionally, the first authentication frame may also include an STA link MAC address.

In this embodiment, the position of the MLO element in the first authentication frame is not limited. FIG. 9A illustrates an example where the MLO element in the first authentication frame is located after the AKMP data-1 field.

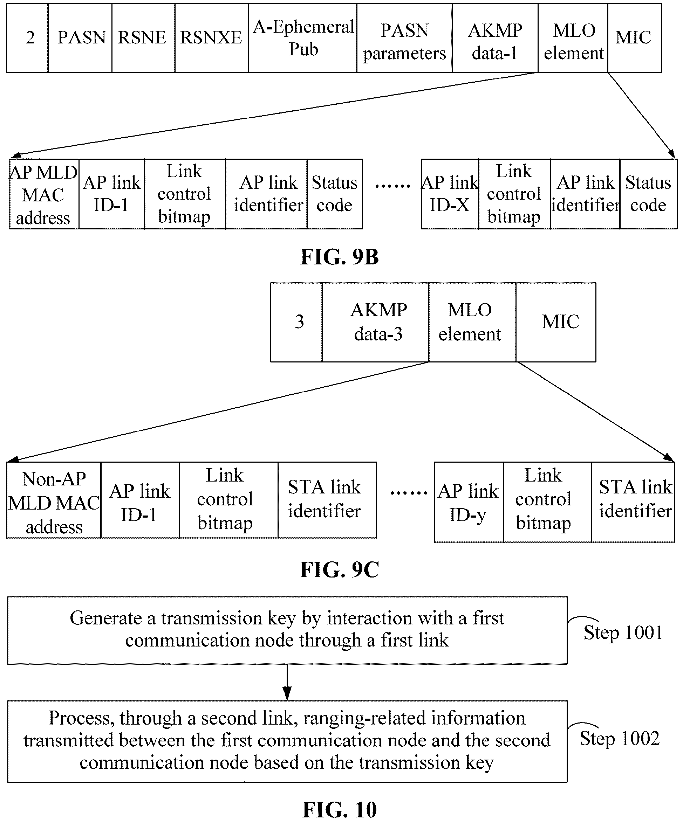

FIG. 9B is a diagram of a second authentication frame according to an embodiment. As shown in FIG. 9B, the second authentication frame in this embodiment may be implemented by adding an MLO element to the second PASN authentication frame. The MLO element in the second authentication frame includes an AP MLD MAC address and MLO link information (that is, the request link information of the second authentication frame). The MLO link information in the second authentication frame includes the AP link ID, the link control bitmap, the AP link identifier, a second RSNE (not shown in the figure), and a second RSNXE (not shown in the figure). The AP link ID may include multiple IDs, represented as AP link ID-1, ..., and AP link ID-x in FIG. 9B. Each AP link ID corresponds to an AP link identifier. The AP link identifier may be AP1 link MAC address, AP2 link MAC address, ..., and APx link MAC address. In FIG. 9B, the MLO link information in the second authentication frame also includes a status code corresponding to each AP link ID.

Optionally, the MLO link information in the MLO element of the second authentication frame may include either the AP link ID or the AP link identifier.

As mentioned earlier, the AP link ID and/or the AP link identifier in the second authentication frame with a corresponding status code indicating that a connection is allowed on the link are the at least two target second communication node side link addresses of the AP MLD. Optionally, one of the at least two target second communication node side link addresses in the second authentication frame may be included in the MAC header of the second PASN authentication frame, and the remaining target second communication node side link addresses are included in the frame body of the second PASN authentication frame.

Optionally, the AP link ID and/or the AP link identifier in the second authentication frame are a subset of the AP link ID and/or the AP link identifier in the first authentication frame. For example, if the AP MLD supports three links and the STA requests to establish PASN on the first and second links, the MLO link info in the second PASN authentication frame sent by the AP may only include information corresponding to the first and second links.

In this embodiment, the position of the MLO element in the second authentication frame is not limited. FIG. 9B illustrates an example where the MLO element in the second authentication frame is located after the AKMP data-2 field and before the MIC field.

FIG. 9C is a diagram of a third authentication frame according to an embodiment. As shown in FIG. 9C, the third authentication frame in this embodiment may be implemented by adding an MLO element to the third PASN authentication frame. The MLO element in the third authentication frame includes a non-AP MLD MAC address and MLO link information. The MLO link information in the third authentication frame includes the AP link ID, the link control bitmap, an STA link identifier, a third RSNE, and a third RSNXE. The AP link ID may include multiple IDs, represented as AP link ID-1, ..., and AP link ID-y in FIG. 9C. Each AP link ID corresponds to an STA link identifier. The STA link identifier may be STA 1 link MAC address, STA 2 link MAC address, ..., and STA y link MAC address. y is an integer greater than 0.

Optionally, the AP link ID, link control bitmap, STA link identifier, third RSNE, and third RSNXE are optional contents in the third authentication frame. It can be understood that the AP link ID in the third authentication frame is a target second communication node side link address.

In this embodiment, the position of the MLO element in the third authentication frame is not limited. FIG. 9C illustrates an example where the MLO element in the third authentication frame is located after the AKMP data-3 field and before the MIC field.

In 504, through a second link, ranging-related information transmitted between the first communication node and the second communication node is processed based on the transmission key.

The second link is any one of the at least two links.

The possible implementation of 504 is as follows: The first communication node may determine, based on a preset strategy, the current first communication node side link address corresponding to the second link; determine, based on the current first communication node side link address, the current second communication node side link address corresponding to the current first communication node side link address; encrypt the ranging-related information based on the transmission key to obtain encrypted ranging-related information; and send the encrypted ranging-related information to the second communication node by using the current second communication node side link address.

Optionally, the encrypted ranging-related information is included in an FTM frame. Transmitting the ranging-related information between the first communication node and the second communication node based on the transmission key may also be referred to as the first communication node and the second communication node performing an FTM session.

Optionally, the preset strategy may be at least one of a network status, a scheduling strategy, the distance between the first communication node and the second communication node, or user indication information.

Optionally, the first communication node may first determine the second link based on the preset strategy and then determine the corresponding current first communication node side link address based on the second link.

Of course, the FTM session may also be initiated by the second communication node.

With continued reference to FIG. 6, at time T1, the first communication node and the second communication node perform an FTM session. Optionally, the first communication node uses the current second communication node side link address corresponding to the current first communication node side link address to initiate an FTM session with the second communication node and complete ranging and positioning. Alternatively, the second communication node uses the current first communication node side link address corresponding to the current second communication node side link address to initiate an FTM session with the first communication node and complete ranging and positioning.

At time T2, the first communication node and the second communication node perform an FTM session. Optionally, the first communication node uses the current second communication node side link address corresponding to the current first communication node side link address to initiate an FTM session with the second communication node and complete ranging and positioning. Alternatively, the second communication node uses the current first communication node side link address corresponding to the current second communication node side link address to initiate an FTM session with the first communication node and complete ranging and positioning.

Time T1 and time T2 may be the same or different. The current second communication node side link address or the current first communication node side link address at time T1 may be the same as or different from the current second communication node side link address or the current first communication node side link address at time T2.

It can be understood that in this embodiment, the PASN frame interaction process and the FTM session may be completed on the same or different links, that is, the first link and the second link may be the same or different.

In scenarios where the second communication node is a non-collocated AP MLD, multiple second links and multiple current second communication node side link addresses are provided. Sending the encrypted ranging-related information to the second communication node by using the current second communication node side link address includes sending the encrypted ranging-related information to affiliated sub-nodes of the second communication node deployed at different locations by using the multiple current second communication node side link addresses.

In this implementation, the affiliated sub-nodes deployed at different locations and corresponding to the current second communication node side link addresses receive the encrypted ranging-related information fed back by the first communication node. The affiliated sub-nodes send the encrypted ranging-related information fed back by the first communication node and the corresponding current first communication node side link address to the second communication node. The second communication node receives the encrypted ranging-related information fed back by the first communication node and the corresponding current first communication node side link addresses sent by the multiple affiliated sub-nodes. When the second communication node determines that device addresses of the first communication node corresponding to the current first communication node side link addresses are identical, the second communication node performs multi-point positioning of the first communication node based on the encrypted ranging-related information fed back by the first communication node. In this scenario, multi-point positioning of the first communication node can be achieved, and positioning accuracy can be improved.

In the multi-link communication method provided by this embodiment, the first communication node and the second communication node interact through the first authentication frame, the second authentication frame, and the third authentication frame to generate a transmission key. In this manner, the generation efficiency is high, and the efficiency of multi-link communication is further improved.

FIG. 10 is a flowchart of a multi-link communication method according to an embodiment. The method provided by this embodiment is applicable to a second communication node. In this example, the second communication node (also referred to as the second communication node device) may be a network device. The network device in this embodiment may be an AP MLD supporting the 802.11az protocol or a non-collocated AP MLD in the Wi-Fi 8 protocol. The method includes the operations below.

In 1001, a transmission key is generated by interaction with a first communication node through a first link.

At least two links are included between the first communication node and the second communication node.

The implementation process and technical principles of 1001 are similar to those of 201 and are not repeated here.

In 1002, through a second link, ranging-related information transmitted between the first communication node and the second communication node is processed based on the transmission key.

The second link is any one of the at least two links.

The second communication node in this embodiment may send the ranging-related information to the first communication node through the second link based on the transmission key or receive the ranging-related information from the first communication node through the second link based on the transmission key.

Optionally, the second communication node sending the ranging-related information to the first communication node through the second link based on the transmission key refers to the second communication node encrypting the ranging-related information based on the transmission key and sending the encrypted ranging-related information to the first communication node through the second link. The encrypted ranging-related information in this embodiment may be included in an FTM frame.

Optionally, the second communication node receiving the ranging-related information from the first communication node through the second link based on the transmission key refers to the second communication node receiving the ranging-related information from the first communication node through the second link and decrypting the received ranging-related information using the transmission key. The ranging-related information sent by the first communication node in this embodiment may be included in an FTM frame.

This embodiment provides a multi-link communication method, including the following: A second communication node interacts with a second communication node through a first link to generate a transmission key, where at least two links are included between the first communication node and the second communication node. Through a second link, ranging-related information transmitted between the first communication node and the second communication node is processed based on the transmission key, where the second link is any one of the at least two links. The method achieves the following technical effects: On the one hand, the transmission key generated through the interaction between the second communication node and the second communication node via the first link can be used to transmit the ranging-related information between the first communication node and the second communication node, enhancing the security of multi-link communication and thereby improving the security of ranging and positioning. On the other hand, the transmission key is generated through the first link, and the ranging-related information is transmitted through the second link, where the first link and the second link may be the same or different, so the flexibility of multi-link communication is improved, and thus the flexibility of ranging and positioning is enhanced. Moreover, after the transmission key is generated through the first link, it is not required to generate a key again when ranging-related information is transmitted; instead, the transmission key generated through the first link is directly used, improving the communication efficiency of multi-link communication and thus enhancing the efficiency of ranging and positioning.

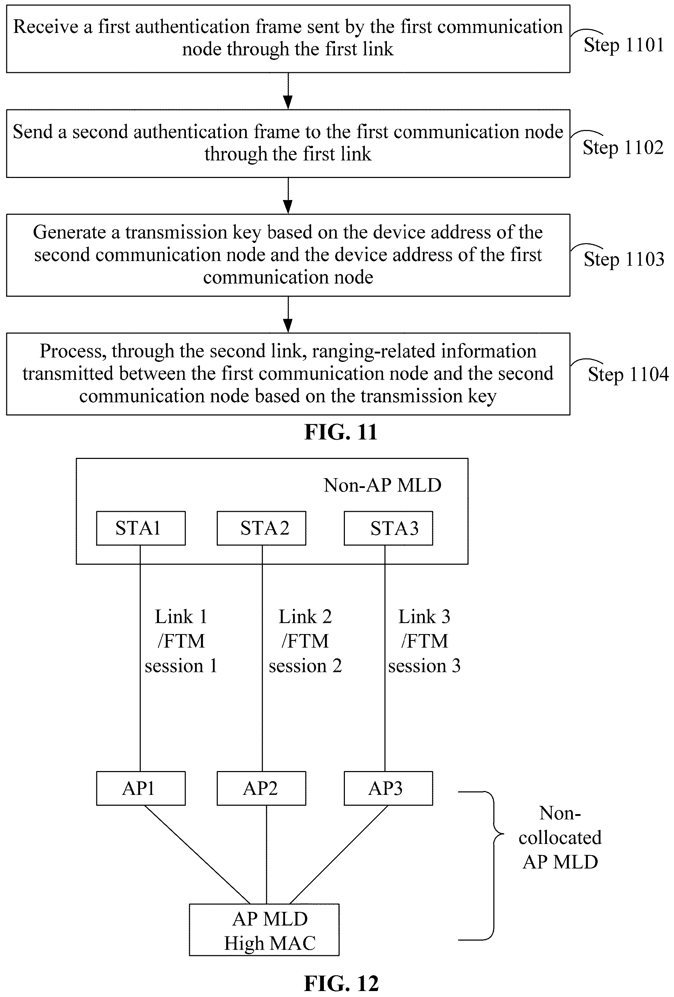

FIG. 11 is a flowchart of another multi-link communication method according to an embodiment. Based on the embodiment shown in FIG. 10 and various optional implementations, this embodiment elaborates on the process of generating a transmission key. As shown in FIG. 11, the multi-link communication method provided by this embodiment includes 1101 to 1104.

In 1101, a first authentication frame sent by the first communication node is received through the first link.

The first authentication frame includes a device address of the first communication node.

In 1102, a second authentication frame is sent to the first communication node through the first link.

The second authentication frame includes a device address of the second communication node.

In 1103, a transmission key is generated based on the device address of the second communication node and the device address of the first communication node.

Optionally, the first authentication frame also includes at least two candidate second communication node side link addresses requested by the first communication node.

Optionally, the second authentication frame also includes at least two target second communication node side link addresses of the second communication node.

Optionally, the at least two target second communication node side link addresses are a subset of the at least two candidate second communication node side link addresses.

Optionally, after 1102, the method also includes receiving, through the first link, a third authentication frame sent by the first communication node. The third authentication frame includes the device address of the first communication node.

Optionally, the first authentication frame and/or the third authentication frame also includes a first communication node side link address corresponding to the at least two target second communication node side link addresses.

The implementation process and technical principles of 1103 are similar to those of 503 and are not repeated here.

The implementation methods of the first authentication frame, the second authentication frame, and the third authentication frame in this embodiment are similar to those in the embodiment shown in FIG. 5 and various optional implementations and are not repeated here.

In 1104, through a second link, ranging-related information transmitted between the first communication node and the second communication node is processed based on the transmission key.

In this embodiment, the implementation process of 1104 may include the following: determining, based on a preset strategy, the current second communication node side link address corresponding to the second link; determining, based on the current second communication node side link address, the current first communication node side link address corresponding to the current second communication node side link address; encrypting the ranging-related information based on the transmission key to obtain encrypted ranging-related information; and sending the encrypted ranging-related information to the first communication node by using the current first communication node side link address.

In scenarios where the second communication node is a non-collocated AP MLD, multiple second links and multiple current second communication node side link addresses are provided. Sending the encrypted ranging-related information to the first communication node by using the current first communication node side link address may include controlling affiliated sub-nodes deployed at different locations and corresponding to the multiple current second communication node side link addresses to send the encrypted ranging-related information to the first communication node and receive ranging-related information and the corresponding current first communication node side link address fed back by the first communication node; receiving the ranging-related information fed back by the first communication node and the corresponding current first communication node side link addresses sent by the multiple affiliated sub-nodes; when it is determined that device addresses of the first communication node corresponding to the current first communication node side link addresses are identical, performing multi-point positioning of the first communication node based on the ranging-related information fed back by the first communication node. This implementation can achieve multi-point positioning of the first communication node and improve the positioning accuracy of the first communication node.

Optionally, before the first authentication frame sent by the first communication node is received through the first link, the method provided by this embodiment also includes sending a management frame to the first communication node. The management frame includes second communication node side link addresses supported by the second communication node.

In the multi-link communication method provided by this embodiment, the first communication node and the second communication node interact through the first authentication frame, the second authentication frame, and the third authentication frame to generate a transmission key. In this manner, the generation efficiency is high, and the efficiency of multi-link communication is further improved.

FIG. 12 is a diagram of an application of a multi-link communication method according to an embodiment. As shown in FIG. 12, in this application scenario, the first communication node is a non-AP MLD, including STA1, STA2, and STA3. The second communication node is a non-collocated AP MLD, including AP1, AP2, AP3, and an AP MLD High MAC deployed at different locations. In this scenario, the process of establishing multi-link communication between the non-AP MLD and the non-collocated AP MLD is as follows:

In 1201, the non-AP MLD supporting the 802.11az protocol uses the multi-link discovery process defined by the 802.11bn protocol to discover a multi-link network device (non-collocated AP MLD, with its affiliated AP1, AP2, and AP3 deployed at different locations) supporting the 802.11az and 802.11bn protocols. Exemplarily, the non-AP MLD receives a management frame (such as a beacon or probe response frame) sent by the non-collocated AP MLD on any link.

In 1202, on the first link, the non-AP MLD sends a first MLO PASN authentication frame (that is, the first authentication frame). The frame format is shown in FIG. 9A.

The first authentication frame includes the non-AP MLD MAC address (non-AP MLD MACI address) and multi-link link ID information (the AP Link IDs corresponding to Link 1, Link 2, and Link 3, link control bitmap, and RSNE and RSNXE fields).

In 1203, after receiving the preceding request, the non-collocated AP MLD sends a second MLO PASN authentication frame (that is, the second authentication frame). The frame format is shown in FIG. 9B.

The second authentication frame includes the AP MLD MAC address and multi-link link ID information (the AP Link IDs corresponding to Link 1, Link 2, and Link 3, link control bitmap, RSN and RSNXE fields, AP (AP1, AP2, and AP3) link MAC addresses, and connection allowance indication information).

In 1204, after the interaction of the first and second MLO PASN authentication frames, the non-AP MLD and the AP MLD generate a PTK for encryption, respectively.

In 1205, after receiving the second MLO PASN authentication frame sent by the AP MLD, the non-AP MLD sends a third MLO PASN authentication frame (that is, the third authentication frame). The frame format is shown in FIG. 9C.

The third authentication frame includes the non-AP MLD MAC address and multi-link link ID information (the AP Link IDs corresponding to Link 1, Link 2, and Link 3, link control bitmap, RSN and RSNXE fields, and STA (STA1, STA2, STA3) link MAC addresses).

In 1206, at time T1, the non-AP MLD or the non-collocated AP MLD uses the link MAC address corresponding to AP1/STA1 on the first link to initiate FTM session 1 with the counterpart and complete ranging.

In 1207, at time T2, the non-AP MLD or the non-collocated AP MLD uses the link MAC address corresponding to AP2/STA2 on the second link to initiate FTM session 2 with the counterpart and complete ranging.

In 1208, at time T3, the non-AP MLD or the non-collocated AP MLD uses the link MAC address corresponding to AP3/STA3 on the third link to initiate FTM session 3 with the counterpart and complete ranging.

T1, T2, and T3 may be the same, different, or partially the same. No sequential order is present between 1206, 1207, and 1208.

In 1209, based on the MAC address information of STA1, STA2, and STA3, the non-collocated AP MLD determines that the ranging on the three links with STA1, STA2, and STA3 originates from the same non-AP MLD, thereby achieving precise positioning of the non-AP MLD.

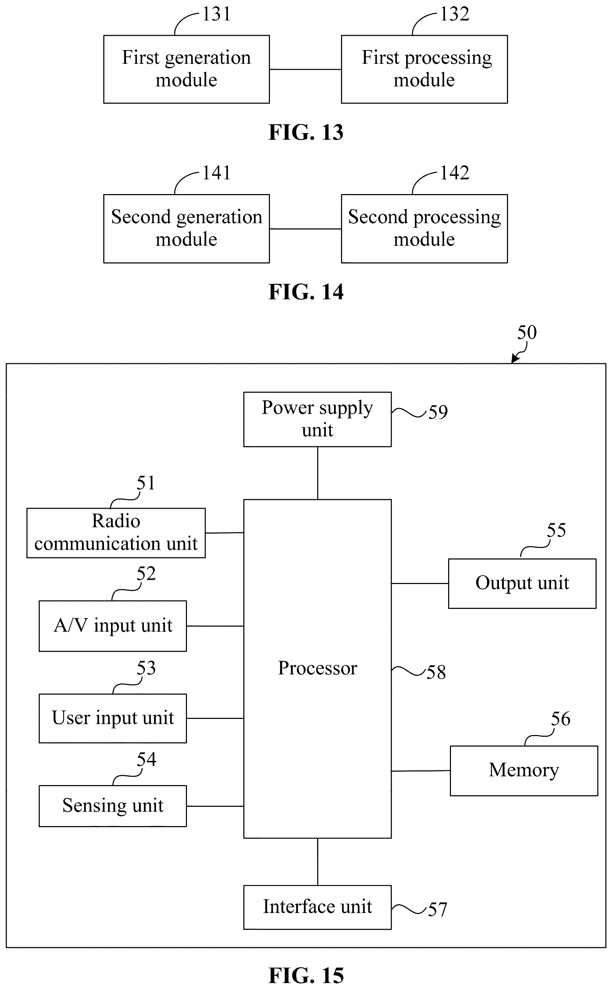

FIG. 13 is a diagram illustrating the structure of a multi-link communication apparatus according to an embodiment. The multi-link communication apparatus may be configured in a first communication node. The multi-link communication apparatus provided by this embodiment includes a first generation module 131 and a first processing module 132.

The first generation module 131 is configured to interact with a second communication node through a first link to generate a transmission key.

At least two links are included between the first communication node and the second communication node.

The first processing module 132 is configured to process, through a second link, ranging-related information transmitted between the first communication node and the second communication node based on the transmission key.

The second link is any one of the at least two links.

In an embodiment, the first generation module 131 is configured to send a first authentication frame to the second communication node through the first link, where the first authentication frame includes a device address of the first communication node; receive a second authentication frame sent by the second communication node through the first link, where the second authentication frame includes a device address of the second communication node; and generate the transmission key based on the device address of the second communication node and the device address of the first communication node.

In an embodiment, the first authentication frame also includes at least two candidate second communication node side link addresses requested by the first communication node.

In an embodiment, the second authentication frame also includes at least two target second communication node side link addresses of the second communication node.

In an embodiment, the at least two target second communication node side link addresses are a subset of the at least two candidate second communication node side link addresses.

In an embodiment, the apparatus also includes a sending module configured to send a third authentication frame to the second communication node through the first link, where the third authentication frame includes the device address of the first communication node.

In an embodiment, the apparatus also includes a first determination module configured to determine, based on the second authentication frame, a first communication node side link address corresponding to the at least two target second communication node side link addresses.

In an embodiment, the first processing module 132 is configured to determine, based on a preset strategy, a current first communication node side link address corresponding to the second link; determine, based on the current first communication node side link address, a current second communication node side link address corresponding to the current first communication node side link address; encrypt the ranging-related information based on the transmission key to obtain encrypted ranging-related information; and send the encrypted ranging-related information to the second communication node by using the current second communication node side link address.

In an embodiment, multiple second links and multiple current second communication node side link addresses are provided. In terms of sending the encrypted ranging-related information to the second communication node by using the current second communication node side link address, the first processing module 132 is configured to send the encrypted ranging-related information to affiliated sub-nodes of the second communication node deployed at different locations by using the multiple current second communication node side link addresses.

In an embodiment, the encrypted ranging-related information is contained in an FTM frame.

In an embodiment, the apparatus also includes a receiving module configured to receive a management frame sent by the second communication node, where the management frame includes second communication node side link addresses supported by the second communication node.

In an embodiment, the management frame includes a first management frame and/or a second management frame. The first management frame includes one second communication node side link address, and the second management frame includes at least two second communication node side link addresses.

In an embodiment, at least two first management frames located on different links are provided.

In an embodiment, the apparatus also includes a second determination module configured to determine, from the second communication node side link addresses supported by the second communication node, the at least two candidate second communication node side link addresses requested by the first communication node.

In an embodiment, the management frame also includes a source RSNE and a source RSNXE.

In an embodiment, request link information in the first authentication frame also includes at least one of a first RSNE or a first RSNXE.

In an embodiment, the first RSNE and the first RSNXE are a subset of the source RSNE and the source RSNXE included in the management frame, respectively.

In an embodiment, a target second communication node side link address includes at least one of an index of a target second communication node side link or a MAC address of a target second communication node side link.

In an embodiment, the first authentication frame and/or the third authentication frame also include a first communication node side link address.

In an embodiment, request link information in the second authentication frame also includes at least one of an indication of whether a link connection is allowed, a second RSNE, or a second RSNXE.

In an embodiment, the device address is a MAC address.

In an embodiment, generating the transmission key requires at least the device address of the second communication node, the device address of the first communication node, and a PRF.

The multi-link communication apparatus provided by this embodiment is used to implement the multi-link communication method of the preceding embodiments. The implementation principles and technical effects of the multi-link communication apparatus provided by this embodiment are similar to those of the preceding embodiments and are not repeated here.

FIG. 14 is a diagram illustrating the structure of another multi-link communication apparatus according to an embodiment. The multi-link communication apparatus may be configured in a second communication node. The multi-link communication apparatus provided by this embodiment includes a second generation module 141 and a second processing module 142.

The second generation module 141 is configured to interact with a first communication node through a first link to generate a transmission key.

At least two links are included between the first communication node and the second communication node.

The second processing module 142 is configured to process, through a second link, ranging-related information transmitted between the first communication node and the second communication node based on the transmission key.

The second link is any one of the at least two links.

In an embodiment, the second generation module 141 is configured to receive a first authentication frame sent by the first communication node through the first link, where the first authentication frame includes a device address of the first communication node; send a second authentication frame to the first communication node through the first link, where the second authentication frame includes a device address of the second communication node; and generate the transmission key based on the device address of the second communication node and the device address of the first communication node.

In an embodiment, the first authentication frame also includes at least two candidate second communication node side link addresses requested by the first communication node.

In an embodiment, the second authentication frame also includes at least two target second communication node side link addresses of the second communication node.

In an embodiment, the at least two target second communication node side link addresses are a subset of the at least two candidate second communication node side link addresses.

In an embodiment, the apparatus also includes a receiving module configured to receive a third authentication frame sent by the first communication node through the first link, where the third authentication frame includes the device address of the first communication node.

In an embodiment, the first authentication frame and/or the third authentication frame also include a first communication node side link address corresponding to the at least two target second communication node side link addresses.

In an embodiment, the second processing module 142 is configured to determine, based on a preset strategy, a current second communication node side link address corresponding to the second link; determine, based on the current second communication node side link address, a current first communication node side link address corresponding to the current second communication node side link address; encrypt the ranging-related information based on the transmission key to obtain encrypted ranging-related information; and send the encrypted ranging-related information to the first communication node by using the current first communication node side link address.

In an embodiment, multiple second links and multiple current second communication node side link addresses are provided. In terms of sending the encrypted ranging-related information to the first communication node by using the current first communication node side link address, the second processing module 142 is configured to control affiliated sub-nodes deployed at different locations and corresponding to the multiple current second communication node side link addresses to send the encrypted ranging-related information to the first communication node and receive ranging-related information and the corresponding current first communication node side link address fed back by the first communication node; receive the ranging-related information fed back by the first communication node and the corresponding current first communication node side link addresses sent by the multiple affiliated sub-nodes; when it is determined that device addresses of the first communication node corresponding to the multiple current first communication node side link addresses are identical, perform multi-point positioning of the first communication node based on the ranging-related information fed back by the first communication node.

In an embodiment, the apparatus also includes a sending module configured to send a management frame to the first communication node. The management frame includes a second communication node side link address supported by the second communication node.

The multi-link communication apparatus provided by this embodiment is used to implement the multi-link communication method of the preceding embodiments. The implementation principles and technical effects of the multi-link communication apparatus provided by this embodiment are similar to those of the preceding embodiments and are not repeated here.

Embodiments of this application also provide a communication node. The communication node includes a processor, which is configured to, when executing a computer program, perform the method provided in any embodiment of this application. Specifically, the communication node may be a first communication node or a second communication node. The first communication node includes a processor that, when executing a computer program, is configured to implement the multi-link communication method provided in any embodiment of this application. The second communication node includes a processor that, when executing a computer program, is configured to implement the multi-link communication method provided in any embodiment of this application. Exemplarily, the first communication node may be a terminal device as provided in any embodiment of this application, and the second communication node may be a network device as provided in any embodiment of this application. This application does not impose specific limitations on this.

Exemplarily, the following embodiments provide diagrams illustrating the structure of a communication node as a terminal device and a network device, respectively:

FIG. 15 is a diagram illustrating the structure of a multi-link terminal device according to an embodiment. The multi-link terminal device (hereinafter referred to as the terminal) may be implemented in various forms. The terminal in this application may include but is not limited to, mobile terminal devices such as a mobile phone, a smart phone, a notebook computer, a digital broadcast receiver, a Personal Digital Assistant (PDA), a Portable Device (PAD), a Portable Multimedia Player (PMP), a navigation apparatus, a vehicle-mounted terminal device, a vehicle-mounted display terminal, and a vehicle-mounted electronic rearview mirror and fixed terminal devices such as a digital television (TV) and a desktop computer.

As shown in FIG. 15, the terminal 50 may include a radio communication unit 51, an Audio/Video (A/V) input unit 52, a user input unit 53, a sensing unit 54, an output unit 55, a memory 56, an interface unit 57, a processor 58, and a power supply unit 59. FIG. 15 shows a terminal including multiple components; but it is to be understood that not all illustrated components are required to be implemented. More or fewer components may be implemented instead.

In this embodiment, the radio communication unit 51 allows radio communication between the terminal 50 and a network device or network. The A/V input unit 52 is configured to receive audio or video signals. The user input unit 53 may generate key input data based on commands input by a user to control various operations of the terminal 50. The sensing unit 54 monitors the current state of the terminal 50, the position of the terminal 50, the presence or absence of a user's touch input on the terminal 50, the orientation of the terminal 50, and the acceleration or deceleration movement and direction of the terminal 50 and generates commands or signals for controlling the operation of the terminal 50. The interface unit 57 serves as an interface through which at least one external device can connect to the terminal 50. The output unit 55 is configured to provide output signals in a visual, audio, and/or tactile manner. The memory 56 may store software programs of processing and control operations executed by the processor 58 and the like or may temporarily store data that has been output or is to be output. The memory 56 may include at least one type of storage medium. Moreover, the terminal 50 may cooperate with a network storage apparatus that implements the storage function of the memory 56 through a network connection. The processor 58 is generally configured to control the overall operation of the terminal 50. Under the control of the processor 58, the power supply unit 59 receives external power or internal power and provides appropriate power required for operating various elements and components.

The processor 58 executes the programs stored in the memory 56 to perform at least one function application and data processing, for example, to implement the method provided by the embodiments of this application.

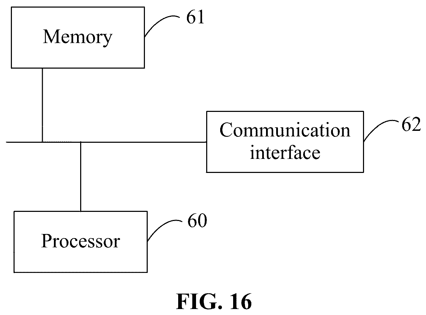

FIG. 16 is a diagram illustrating the structure of a multi-link network device according to an embodiment. As shown in FIG. 16, the multi-link network device (hereinafter referred to as the network device) includes a processor 60, a memory 61, and a communication interface 62. One or more processors 60 in the network device may be provided, and FIG. 16 shows one processor 60 as an example. The processor 60, memory 61, and communication interface 62 in the network device may be connected via a bus or other means. FIG. 16 shows a bus connection as an example. The bus represents one or more of several types of bus structures, including a memory bus or a memory controller, a peripheral bus, an Accelerated Graphics Port (AGP), a processor, or a local bus using any bus structure among multiple bus structures.

As a computer-readable storage medium, the memory 61 may be configured to store software programs, computer-executable programs, and modules, such as program instructions/modules corresponding to the method in the embodiments of this application. The processor 60 runs the software programs, instructions, and modules stored in the memory 61 to execute at least one of function applications and data processing of the network device, that is, to implement the method described above.

The memory 61 may include a program storage region and a data storage region. The program storage region may store an operating system and an application program required by at least one function. The data storage region may store data created depending on the use of a terminal. Additionally, the memory 61 may include a high-speed random-access memory and may also include a non-volatile memory, for example, at least one magnetic disk memory, a flash memory, or another non-volatile solid-state memory. In some examples, the memory 61 may include memories that are remotely disposed relative to the processor 60, and these remote memories may be connected to the network device via a network. Examples of the preceding network include but are not limited to, the Internet, an intranet, a network, a communication network, and a combination thereof.

The communication interface 62 may be configured to receive and send data.

The embodiments of this application also provide a computer-readable storage medium. The computer-readable storage medium is configured to store a computer program, and when the computer program is executed by a processor, the method provided by any one of the embodiments of this application is implemented.

The computer storage medium in this embodiment of this application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device, or any combination thereof. The computer-readable storage medium include (non-exhaustive list) an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage element, a magnetic storage device, or any suitable combination thereof. In this application, the computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof.

The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any suitable medium including, but not limited to, a radio medium, a wire, an optical cable, and Radio Frequency (RF), or any suitable combination thereof.

Computer program codes for executing the operations of the present disclosure may be written in one or more programming languages or a combination of multiple programming languages. The programming languages include object-oriented programming languages (such as Java, Smalltalk, C++, Ruby and Go) and conventional procedural programming languages (such as "C" or similar programming languages). The program codes may be executed entirely on a user computer, partly on a user computer, as a stand-alone software package, partly on a user computer and partly on a remote computer, or entirely on a remote computer or a server. In the case where the remote computer is involved, the remote computer may be connected to the user computer via any type of network (including a Local Area Network (LAN) or a Wide Area Network (WAN)) or may be connected to an external computer (for example, via the Internet through an Internet service provider).

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of this application may be implemented in hardware or special-purpose circuits, software, logic, or any combination thereof. For example, some aspects may be implemented in hardware while other aspects may be implemented in firmware or software executable by a controller, a microprocessor, or another computing apparatus, though this application is not limited thereto.

Embodiments of this application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of this application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented by using any suitable data storage technology, such as, but not limited to, a Read-Only Memory (ROM), a Random-Access Memory (RAM), and an optical memory apparatus and system (a Digital Video Disc (DVD) or a Compact Disk (CD)). The computer-readable medium may include a non-transitory storage medium. The data processor may be of any type suitable to the local technical environment, such as, but is not limited to, a general purpose computer, a special purpose computer, a microprocessor, a Digital Signal Processing (DSP), an Application Specific Integrated Circuit (ASIC), a Field-Programmable Gate Array (FPGA), and a processor based on a multi-core processor architecture.

**Claims**

1. A multi-link communication method, the method being applied to a first communication node and comprising:

   interacting with a second communication node through a first link to generate a transmission key, wherein at least two links are comprised between the first communication node and the second communication node; and
   processing, through a second link, ranging-related information transmitted between the first communication node and the second communication node based on the transmission key, wherein the second link is any one of the at least two links.

2. The multi-link communication method according to claim 1, wherein interacting with the second communication node through the first link to generate the transmission key comprises:

   sending a first authentication frame to the second communication node through the first link, wherein the first authentication frame comprises a device address of the first communication node;
   receiving a second authentication frame sent by the second communication node through the first link, wherein the second authentication frame comprises a device address of the second communication node; and
   generating the transmission key based on the device address of the second communication node and the device address of the first communication node.

3. The multi-link communication method according to claim 2, wherein the first authentication frame further comprises at least two candidate second communication node side link addresses requested by the first communication node; and the second authentication frame further comprises at least two target second communication node side link addresses of the second communication node.

4. The multi-link communication method according to claim 3, wherein the at least two target second communication node side link addresses are a subset of the at least two candidate second communication node side link addresses.

5. The multi-link communication method according to claim 3, wherein after receiving the second authentication frame sent by the second communication node through the first link, the method further comprises:
sending a third authentication frame to the second communication node through the first link, wherein the third authentication frame comprises the device address of the first communication node.

6. The multi-link communication method according to claim 3, wherein before processing, through the second link, the ranging-related information transmitted between the first communication node and the second communication node based on the transmission key, the method further comprises:
determining, based on the second authentication frame, a first communication node side link address corresponding to the at least two target second communication node side link addresses.

7. The multi-link communication method according to claim 6, wherein processing, through the second link, the ranging-related information transmitted between the first communication node and the second communication node based on the transmission key comprises:

   determining, based on a preset strategy, a current first communication node side link address corresponding to the second link;
   determining, based on the current first communication node side link address, a current second communication node side link address corresponding to the current first communication node side link address;
   encrypting the ranging-related information based on the transmission key to obtain encrypted ranging-related information; and
   sending, by using the current second communication node side link address, the encrypted ranging-related information to the second communication node.

8. The multi-link communication method according to claim 7, wherein a plurality of second links are provided, and a plurality of current second communication node side link addresses are provided; and
sending, by using the current second communication node side link address, the encrypted ranging-related information to the second communication node comprises:
sending, by using the plurality of current second communication node side link addresses, the encrypted ranging-related information to affiliated sub-nodes of the second communication node deployed at different locations.

9. The multi-link communication method according to claim 7, wherein the encrypted ranging-related information is contained in a Fine Timing Measurement (FTM) frame.

10. The multi-link communication method according to claim 3, wherein before sending the first authentication frame to the second communication node through the first link, the method further comprises:
receiving a management frame sent by the second communication node, wherein the management frame comprises second communication node side link addresses supported by the second communication node.

11. The multi-link communication method according to claim 10, wherein the management frame comprises at least one of a first management frame or a second management frame, wherein the first management frame comprises one second communication node side link address, and the second management frame comprises at least two second communication node side link addresses.

12. The multi-link communication method according to claim 11, wherein at least two first management frames are provided and located on different links.

13. The multi-link communication method according to claim 10, wherein before sending the first authentication frame to the second communication node through the first link, the method further comprises:
determining, from the second communication node side link addresses supported by the second communication node, the at least two candidate second communication node side link addresses requested by the first communication node.

14. The multi-link communication method according to claim 10, wherein the management frame further comprises a source Robust Security Network Element (RSNE) and a source Robust Security Network Extension Element (RSNXE).

15. The multi-link communication method according to claim 14, wherein request link information in the first authentication frame further comprises at least one of a first RSNE or a first RSNXE.

16. The multi-link communication method according to claim 15, wherein the first RSNE is a subset of the source RSNE comprised in the management frame, and the first RSNXE is a subset of the source RSNXE comprised in the management frame.

17. The multi-link communication method according to claim 3, wherein a target second communication node side link address of the at least two target second communication node side link addresses comprises at least one of an index of a target second communication node side link or a Media Access Control (MAC) address of a target second communication node side link.

18. The multi-link communication method according to claim 5, wherein at least one of the first authentication frame or the third authentication frame further comprises a first communication node side link address.

19. The multi-link communication method according to claim 3, wherein request link information in the second authentication frame further comprises at least one of an indication of whether a link connection is allowed, a second RSNE, or a second RSNXE.

20. The multi-link communication method according to claim 2, wherein the device address is a MAC address.

21. The multi-link communication method according to claim 2, wherein generating the transmission key based on the device address of the second communication node and the device address of the first communication node comprises:
generating the transmission key by requiring at least the device address of the second communication node, the device address of the first communication node, and a Pseudo-Random Function (PRF).

22. A multi-link communication method, the method being applied to a second communication node and comprising:

interacting with a first communication node through a first link to generate a transmission key, wherein at least two links are comprised between the first communication node and the second communication node; and
processing, through a second link, ranging-related information transmitted between the first communication node and the second communication node based on the transmission key, wherein the second link is any one of the at least two links.

23. The multi-link communication method according to claim 22, wherein interacting with the second communication node through the first link to generate the transmission key comprises:

receiving a first authentication frame sent by the first communication node through the first link, wherein the first authentication frame comprises a device address of the first communication node;
sending a second authentication frame to the first communication node through the first link, wherein the second authentication frame comprises a device address of the second communication node; and
generating the transmission key based on the device address of the second communication node and the device address of the first communication node.

24. The multi-link communication method according to claim 23, wherein the first authentication frame further comprises at least two candidate second communication node side link addresses requested by the first communication node; and
the second authentication frame further comprises at least two target second communication node side link addresses of the second communication node.

25. The multi-link communication method according to claim 24, wherein the at least two target second communication node side link addresses are a subset of the at least two candidate second communication node side link addresses.

26. The multi-link communication method according to claim 24, wherein after sending the second authentication frame to the first communication node through the first link, the method further comprises:
receiving a third authentication frame sent by the first communication node through the first link, wherein the third authentication frame comprises the device address of the first communication node.

27. The multi-link communication method according to claim 26, wherein at least one of the first authentication frame or the third authentication frame further comprises a first communication node side link address corresponding to the at least two target second communication node side link addresses.

28. The multi-link communication method according to claim 27, wherein processing, through the second link, the ranging-related information transmitted between the first communication node and the second communication node based on the transmission key comprises:

determining, based on a preset strategy, a current second communication node side link address corresponding to the second link;
determining, based on the current second communication node side link address, a current first communication node side link address corresponding to the current second communication node side link address;
encrypting the ranging-related information based on the transmission key to obtain encrypted ranging-related information; and
sending, by using the current first communication node side link address, the encrypted ranging-related information to the first communication node.

29. The multi-link communication method according to claim 28, wherein a plurality of second links are provided, and a plurality of current second communication node side link addresses are provided; and
sending, by using the current first communication node side link address, the encrypted ranging-related information to the first communication node comprises:

controlling affiliated sub-nodes deployed at different locations and corresponding to the plurality of current second communication node side link addresses to send the encrypted ranging-related information to the first communication node and receive ranging-related information and a corresponding current first communication node side link address fed back by the first communication node;
receiving the ranging-related information fed back by the first communication node and corresponding current first communication node side link addresses sent by the plurality of affiliated sub-nodes; and
in response to determining that device addresses of the first communication node corresponding to the current first communication node side link addresses are identical, performing multi-point positioning of the first communication node based on the ranging-related information fed back by the first communication node.

30. The multi-link communication method according to claim 24, wherein before receiving the first authentication frame sent by the first communication node through the first link, the method further comprises:
sending a management frame to the first communication node, wherein the management frame comprises a second communication node side link address supported by the second communication node.

31. A first communication node, comprising a processor configured to, when executing a computer program, implement the multi-link communication method according to any one of claims 1 to 21.

32. A second communication node, comprising a processor configured to, when executing a computer program, implement the multi-link communication method according to any one of claims 22 to 30.

33. A computer-readable storage medium storing a computer program, wherein when the computer program is executed by a processor, the multi-link communication method according to any one of claims 1 to 21 or the multi-link communication method according to any one of claims 22 to 30 is implemented.

11

First communication node

| STA1 | | STA2 | ······ | STAn |

Link 1      Link 2      Link n

12

| AP1 | | AP2 | ······ | APn |

Second communication node

**FIG. 1A**

13

First communication node

| STA1 | STA2 | ······ | STAn |
|------|------|--------|------|

Link 1        Link 2        Link n

| AP1 | AP2 | ······ | APn |
|-----|-----|--------|-----|

14

Second
communication node

**FIG. 1B**

Step 201

Generate a transmission key by interaction with a second
communication node through a first link

Step 202

Process, through a second link, ranging-related information
transmitted between the first communication node and the second
communication node based on the transmission key

**FIG. 2**

First communication node

STA1    STA2    STA3

Second communication node

AP1    AP2    AP3

Generate the transmission key
based on link 2

At a close position, perform FTM
frame interaction for ranging and
positioning on the 6 GHz frequency
band, that is, link 3, by using the
transmission key

At a farther position, perform FTM
frame interaction for ranging and
positioning on the 2.4 GHz
frequency band, that is, link 1, by
using the transmission key

**FIG. 3**

First communication node

STA1    STA2    STA3

Link 1

AP1    AP2    AP3

Second communication node

First communication node

STA1    STA2    STA3

Link 1    Link 2    Link 3

AP1    AP2    AP3

Second communication node

**FIG. 4**

| Send a first authentication frame to the second communication node through the first link | Step 501 |

↓

| Receive a second authentication frame sent by the second communication node through the first link | Step 502 |

↓

| Generate a transmission key based on the device address of the second communication node and the device address of the first communication node | Step 503 |

↓

| Process, through a second link, ranging-related information transmitted between the first communication node and the second communication node based on the transmission key | Step 504 |

**FIG. 5**

| First communication node | | Second communication node |
|---|---|---|

Step 601a: The second communication node sends a management frame to the first communication node

Step 601b: The first communication node receives the management frame sent by the second communication node

Step 601c: The first communication node determines, from second communication node side link addresses supported by the second communication node included in the management frame, at least two candidate second communication node side link addresses requested by the first communication node

Step 601: The first communication node sends a first authentication frame to the second communication node through the first link

Step 602: The second communication node receives the first authentication frame sent by the first communication node through the first link

Step 603: The second communication node generates a transmission key based on the device address of the second communication node and the device address of the first communication node

Step 604: The second communication node sends a second authentication frame to the first communication node through the first link

Step 605: The first communication node receives the second authentication frame sent by the second communication node through the first link

Step 606: The first communication node generates a transmission key based on the device address of the second communication node and the device address of the first communication node

Step 607: The first communication node sends a third authentication frame to the second communication node through the first link

Step 608: The second communication node receives the third authentication frame sent by the first communication node through the first link

At time T1, the first communication node and the second communication node perform an FTM session

At time T2, the first communication node and the second communication node perform an FTM session

**FIG. 6**

| 1 | PASN | RSNE | RSNXE | S-Ephemeral Pub | PASN parameters | AKMP data-1 |
|---|------|------|-------|-----------------|-----------------|-------------|

**FIG. 7A**

| 2 | PASN | RSNE | RSNXE | A-Ephemeral Pub | PASN parameters | AKMP data-1 | MIC |
|---|------|------|-------|-----------------|-----------------|-------------|-----|

**FIG. 7B**

| 3 | AKMP data-3 | MIC |
|---|-------------|-----|

**FIG. 7C**

| MLD MAC | Link ID | Link control bitmap | Link identifier | RSNE | RSNXE | Status code |
|---------|---------|---------------------|-----------------|------|-------|-------------|

MLO common information      MLO link information

MLO element

**FIG. 8**

| 1 | PASN | RSNE | RSNXE | S-Ephemeral Pub | PASN parameters | AKMP data-1 | MLO element |
|---|------|------|-------|-----------------|-----------------|-------------|-------------|

| Non-AP MLD MAC address | AP link ID-1 | Link control bitmap | ...... | AP link ID-X | Link control bitmap |
|------------------------|--------------|---------------------|--------|--------------|---------------------|

**FIG. 9A**

| 2 | PASN | RSNE | RSNXE | A-Ephemeral Pub | PASN parameters | AKMP data-1 | MLO element | MIC |
|---|------|------|-------|-----------------|-----------------|-------------|-------------|-----|

| AP MLD MAC address | AP link ID-1 | Link control bitmap | AP link identifier | Status code | ...... | AP link ID-X | Link control bitmap | AP link identifier | Status code |
|---|---|---|---|---|---|---|---|---|---|

**FIG. 9B**

| 3 | AKMP data-3 | MLO element | MIC |
|---|-------------|-------------|-----|

| Non-AP MLD MAC address | AP link ID-1 | Link control bitmap | STA link identifier | ...... | AP link ID-y | Link control bitmap | STA link identifier |
|---|---|---|---|---|---|---|---|

**FIG. 9C**

| Generate a transmission key by interaction with a first communication node through a first link | Step 1001 |
|---|---|
| Process, through a second link, ranging-related information transmitted between the first communication node and the second communication node based on the transmission key | Step 1002 |

**FIG. 10**

| | |
|---|---|
| Receive a first authentication frame sent by the first communication node through the first link | Step 1101 |

↓

| | |
|---|---|
| Send a second authentication frame to the first communication node through the first link | Step 1102 |

↓

| | |
|---|---|
| Generate a transmission key based on the device address of the second communication node and the device address of the first communication node | Step 1103 |

↓

| | |
|---|---|
| Process, through the second link, ranging-related information transmitted between the first communication node and the second communication node based on the transmission key | Step 1104 |

**FIG. 11**

Non-AP MLD

| STA1 | STA2 | STA3 |
|---|---|---|

Link 1 /FTM session 1     Link 2 /FTM session 2     Link 3 /FTM session 3

| AP1 | AP2 | AP3 |
|---|---|---|

Non-collocated AP MLD

AP MLD High MAC

**FIG. 12**

131
132

First generation module | First processing module

**FIG. 13**

141
142

Second generation module | Second processing module

**FIG. 14**

50

Power supply unit — 59

51

Radio communication unit

52

A/V input unit

53

User input unit

54

Sensing unit

Processor — 58

55

Output unit

56

Memory

Interface unit — 57

**FIG. 15**

Memory — 61

Communication interface — 62

Processor — 60

**FIG. 16**

## INTERNATIONAL SEARCH REPORT

| International application No. |
| --- |
| **PCT/CN2024/084061** |

| A. | CLASSIFICATION OF SUBJECT MATTER |
| --- | --- |

H04W12/069(2021.01)i; G01S5/02(2010.01)n; H04W12/0471(2021.01)n

According to International Patent Classification (IPC) or to both national classification and IPC

| B. | FIELDS SEARCHED |
| --- | --- |

Minimum documentation searched (classification system followed by classification symbols)

IPC:H04W,H04L,G01S

Documentation searched other than minimum documentation to the extent that such documents are included in the fields searched

Electronic data base consulted during the international search (name of data base and, where practicable, search terms used)

CNTXT, ENTXTC, VEN, IEEE, CNKI: 不同, 第2, 第二, 多, 通道, 协议, 信道, 链路, 测距, 测量距离, 距离测量, 协商, 秘钥, 密钥, different, second, multi+, protocol, channel, link, ranging, distance measurement, negotiate, secret key

| C. | DOCUMENTS CONSIDERED TO BE RELEVANT | |
| --- | --- | --- |
| Category* | Citation of document, with indication, where appropriate, of the relevant passages | Relevant to claim No. |
| X | WO 2023022708 A1 (GOOGLE LLC) 23 February 2023 (2023-02-23) description, paragraphs 0029-0075 | 1-33 |
| X | CN 111066335 A (APPLE INC.) 24 April 2020 (2020-04-24) description, paragraphs 0023-0103 | 1-33 |
| X | CN 112673339 A (APPLE INC.) 16 April 2021 (2021-04-16) description, paragraphs 0047-0214 | 1-33 |
| A | WO 2023061868 A1 (ROBERT BOSCH GMBH) 20 April 2023 (2023-04-20) entire document | 1-33 |
| A | CN 109196840 A (APPLE INC.) 11 January 2019 (2019-01-11) entire document | 1-33 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 May 2024** | **23 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/084061**

| Patent document cited in search report | | | Publication date (day/month/year) | Patent family member(s) | | | Publication date (day/month/year) |
|---|---|---|---|---|---|---|---|
| WO | 2023022708 | A1 | 23 February 2023 | | None | | |
| CN | 111066335 | A | 24 April 2020 | JP | 2024026068 | A | 28 February 2024 |
| | | | | WO | 2019067105 | A1 | 04 April 2019 |
| | | | | KR | 20210111877 | A | 13 September 2021 |
| | | | | KR | 102355291 | B1 | 08 February 2022 |
| | | | | EP | 3656147 | A1 | 27 May 2020 |
| | | | | EP | 3656147 | B1 | 30 June 2021 |
| | | | | JP | 2020532207 | A | 05 November 2020 |
| | | | | JP | 6951553 | B2 | 20 October 2021 |
| | | | | KR | 20200031160 | A | 23 March 2020 |
| | | | | KR | 102297848 | B1 | 03 September 2021 |
| | | | | KR | 20220016281 | A | 08 February 2022 |
| | | | | KR | 102444152 | B1 | 19 September 2022 |
| | | | | JP | 2021170777 | A | 28 October 2021 |
| | | | | JP | 7052123 | B2 | 11 April 2022 |
| | | | | EP | 3886474 | A1 | 29 September 2021 |
| | | | | US | 2020062217 | A1 | 27 February 2020 |
| | | | | US | 10759389 | B2 | 01 September 2020 |
| | | | | JP | 2022104962 | A | 12 July 2022 |
| | | | | JP | 7407855 | B2 | 04 January 2024 |
| | | | | KR | 20220130256 | A | 26 September 2022 |
| | | | | KR | 102636540 | B1 | 14 February 2024 |
| | | | | US | 2019135229 | A1 | 09 May 2019 |
| | | | | US | 10486646 | B2 | 26 November 2019 |
| CN | 112673339 | A | 16 April 2021 | AU | 2019346631 | A1 | 08 April 2021 |
| | | | | AU | 2019346631 | B2 | 24 November 2022 |
| | | | | US | 2021258418 | A1 | 19 August 2021 |
| | | | | US | 11671530 | B2 | 06 June 2023 |
| | | | | EP | 3910460 | A1 | 17 November 2021 |
| | | | | EP | 3910460 | B1 | 19 July 2023 |
| | | | | EP | 3834064 | A1 | 16 June 2021 |
| | | | | EP | 3834064 | B1 | 10 May 2023 |
| | | | | KR | 20210043642 | A | 21 April 2021 |
| | | | | KR | 102537915 | B1 | 26 May 2023 |
| | | | | KR | 20230119262 | A | 16 August 2023 |
| | | | | US | 2020106877 | A1 | 02 April 2020 |
| | | | | US | 11019195 | B2 | 25 May 2021 |
| | | | | EP | 4221265 | A1 | 02 August 2023 |
| | | | | WO | 2020069311 | A1 | 02 April 2020 |
| | | | | KR | 20210082549 | A | 05 July 2021 |
| | | | | KR | 102564520 | B1 | 08 August 2023 |
| | | | | AU | 2021204198 | A1 | 15 July 2021 |
| | | | | AU | 2021204198 | B2 | 09 March 2023 |
| | | | | EP | 4221149 | A1 | 02 August 2023 |
| | | | | US | 2023051718 | A1 | 16 February 2023 |
| | | | | AU | 2023203523 | A1 | 29 June 2023 |
| | | | | US | 2021006652 | A1 | 07 January 2021 |
| | | | | US | 11516337 | B2 | 29 November 2022 |
| WO | 2023061868 | A1 | 20 April 2023 | DE | 102022210629 | A1 | 13 April 2023 |
| CN | 109196840 | A | 11 January 2019 | EP | 4284046 | A2 | 29 November 2023 |

Form PCT/ISA/210 (patent family annex) (July 2022)

**INTERNATIONAL SEARCH REPORT**
Information on patent family members

International application No.

**PCT/CN2024/084061**

| Patent document cited in search report | Publication date (day/month/year) | Patent family member(s) | | | Publication date (day/month/year) |
|---|---|---|---|---|---|
| | | EP | 4284046 | A3 | 17 January 2024 |
| | | EP | 3449611 | A1 | 06 March 2019 |
| | | EP | 3449611 | B1 | 11 October 2023 |
| | | AU | 2017286140 | A1 | 20 December 2018 |
| | | AU | 2017286140 | B2 | 22 October 2020 |
| | | WO | 2017218208 | A1 | 21 December 2017 |
| | | KR | 20190003977 | A | 10 January 2019 |
| | | KR | 102298480 | B1 | 06 September 2021 |
| | | JP | 2021168166 | A | 21 October 2021 |
| | | JP | 7213306 | B2 | 26 January 2023 |
| | | US | 2017359169 | A1 | 14 December 2017 |
| | | US | 11178127 | B2 | 16 November 2021 |
| | | US | 2019171465 | A1 | 06 June 2019 |
| | | US | 11438322 | B2 | 06 September 2022 |
| | | US | 2023300122 | A1 | 21 September 2023 |
| | | AU | 2021200451 | A1 | 25 February 2021 |
| | | AU | 2021200451 | B2 | 29 September 2022 |
| | | US | 2017357523 | A1 | 14 December 2017 |
| | | US | 11582215 | B2 | 14 February 2023 |
| | | JP | 2019521425 | A | 25 July 2019 |
| | | JP | 6907241 | B2 | 21 July 2021 |

Form PCT/ISA/210 (patent family annex) (July 2022)